## Europäisches Patentamt
## European Patent Office
## Office européen des brevets

(19)

(11) Veröffentlichungsnummer : **0 038 917**
**B1**

(12)

# EUROPÄISCHE PATENTSCHRIFT

(45) Veröffentlichungstag der Patentschrift :
21.03.84

(51) Int. Cl.³ : **B 23 B 51/00**

(21) Anmeldenummer : **81101392.9**

(22) Anmeldetag : **26.02.81**

(54) **Zur Herstellung von Bohrlöchern bestimmte Bohreinheit.**

(30) Priorität : **25.04.80 DE 3015999**

(43) Veröffentlichungstag der Anmeldung :
**04.11.81 Patentblatt 81/44**

(45) Bekanntmachung des Hinweises auf die Patenterteilung : **21.03.84 Patentblatt 84/12**

(84) Benannte Vertragsstaaten :
**AT BE CH FR GB IT LI NL SE**

(56) Entgegenhaltungen :
**DE-A- 2 603 431**
**DE-A- 2 657 000**
**DE-C- 670 370**
**GB-A- 2 005 572**
**US-A- 4 113 405**
**US-A- 4 154 311**

(73) Patentinhaber : **Artur Fischer Forschung
Weinhalde 14-18
D-7244 Waldachtal 3 (Tumlingen) (DE)**

(72) Erfinder : **Fischer, Artur, Dr. h.c.
Weinhalde 34
D-7244 Waldachtal 3/Tumlingen (DE)**

Jouve, 18, rue St-Denis, 75001 Paris, France

Zur Herstellung von Bohrlöchern bestimmte Bohreinheit

Die Erfindung betrifft eine zur Herstellung von Bohrlöchern mit Hinterschneidungen bestimmte Bohreinheit aus Bohrschaft und mit diesem verbundenen Bohrplättchen, welches außer der Stirnschneide den Bohrschaft radial überragende Seitenschneiden aufweist, und die mit einer auf dem Bohrschaft festsetzbaren Anschlaghülse versehen ist, die sich in einer Mulde einer über den Bohrschaft geschobenen Anschlagplatte zur Bildung eines Schwenklagers abstützt.

Eine solche Bohreinheit, die beispielsweise aus der DE-A-2 746 029 bekannt ist, ermöglicht in einfacher Weise das Herstellen von Bohrungen mit Hinterschneidungen in der Bohrlochtiefe durch Schwenken des Bohrers, wenn die gewünschte Bohrlochtiefe erreicht ist. Die Anschlagplatte nimmt dabei den beim Bohr- und Schwenkvorgang entstehenden Anpreßdruck auf. Zur Herstellung von Bohrlöchern mit unterschiedlicher Bohrlochtiefe ist es bekannt, die Anschlaghülse auf dem Bohrschaft zu verschieben und bspw. durch eine in der Wandung der Anschlaghülse eingesetzte Stiftschraube auf dem Bohrschaft in der gewünschten Stellung festzusetzen. Eine derartige Festsetzung der Anschlaghülse ist nur für eine Verwendung in weichen Baustoffen geeignet, da in diesen Baustoffen zur Herstellung der Bohrung keine Schlagwirkung der Bohrmaschine benötigt wird. Bei der Herstellung von Bohrlöchern mit Hinterschneidungen in Beton sind jedoch Schlagbohrmaschinen bzw. Bohrhämmer erforderlich. Bei einer Festsetzung der Anschlaghülse am Bohrschaft mit Stiftschraube oder ähnlichen Arretierungen würde durch die Schlagwirkung eine Verstellung des Anschlages durch Lösen ·bzw. Abscheren der Stiftschraube eintreten.

Der Erfindung liegt daher die Aufgabe zugrunde, eine Festsetzung der Anschlaghülse zu schaffen, die auch die Schlagwirkung von Schlagbohrmaschinen und Bohrhämmern aufnehmen kann.

Erfindungsgemäß wird dies dadurch erreicht, daß der in das Bohrfutter eingreifende Teil des Bohrschaftes einen verstärkten Durchmesser zur Bildung eines Anschlages aufweist, an den die Anschlaghülse mit ihrer vom Bohrloch abgewandten Seite anstößt.

Durch diese Gestaltung ergibt sich eine unmittelbare Überleitung des Anpreßdruckes sowie der Schlagwirkung von der Anschlaghülse über den Anschlag des Bohrschaftes und dem Bohrfutter auf die Schlagbohrmaschine. Eine Verschiebung der Anschlaghülse und damit eine Verstellung der eingestellten Bohrlochtiefe ist somit nicht mehr möglich. Nach wie vor sind jedoch unterschiedliche Bohrlochtiefen durch verschiedene Längen der Anschlaghülse einstellbar.

In einer weiteren Ausgestaltung der Erfindung kann der Anschlag des Bohrschaftes als Schulter ausgebildet und vor der Schulter ein Gewindeabschnitt angeordnet sein, auf den die Anschlaghülse mit einem entsprechenden Innengewinde zu ihrer Festsetzung auf dem Bohrschaft aufschraubbar ist. Durch das Verkontern der Anschlaghülse gegen die Schulter des Bohrschaftes entsteht eine feste, das Verdrehen der Anschlaghülse gegenüber dem Bohrschaft ausschließende Verbindung.

In einer weiteren Ergänzung der Erfindung kann der Anschlag am Bohrschaft als Konus ausgebildet sein und die dem Bohrloch abgewandte Seite der Anschlaghülse den entsprechenden Gegenkonus aufweisen.

Durch diese Gestaltung wird der Anpreßdruck und die Schlagwirkung auf eine größere Fläche verteilt, so daß ein geringerer Verschleiß auftritt. Darüberhinaus ist durch die Konusverbindung gleichzeitig auch die Festsetzung der Anschlaghülse erreicht.

Schließlich kann zum Überstülpen über das Bohrplättchen die Anschlaghülse an ihrer Innenbohrung zwei sich gegenüberliegende, in Längsrichtung verlaufende Einschlitzungen aufweisen. Diese Gestaltung ist dann erforderlich, wenn der in das Bohrfutter eingreifende Teil des Bohrschaftes im Außendurchmesser dem Außenmaß der Seitenschneiden des Bohrplättchens entspricht. Zur Bildung eines Anschlages ist dann nämlich die Durchgangsbohrung der Anschlaghülse kleiner als das Außenmaß des Bohrplättchens.

In der Zeichnung sind Ausführungsbeispiele der Erfindung dargestellt. Es zeigen :

Figur 1 die Bohreinheit mit übergestülpter Anschlaghülse und Anschlagplatte,
Figur 2 den Schnitt gemäß der Schnittlinie I-I,
Figur 3 den Schnitt gemäß der Schnittlinie II-II,
Figur 4 die Bohreinheit mit einem als Konus ausgebildeten Anschlag.

Die Bohreinheit besteht aus dem Bohrschaft 1 und dem mit diesem verbundenen Bohrplättchen 2. Dieses weist außer der Stirnschneide 3 noch radial über den Bohrschaft hinausragende Seitenschneiden 4, 5 auf. Zur Bohrmehlabfuhr ist der Bohrschaft mit den Schaft schraubenlinienförmig umwindenden Nuten 6 versehen.

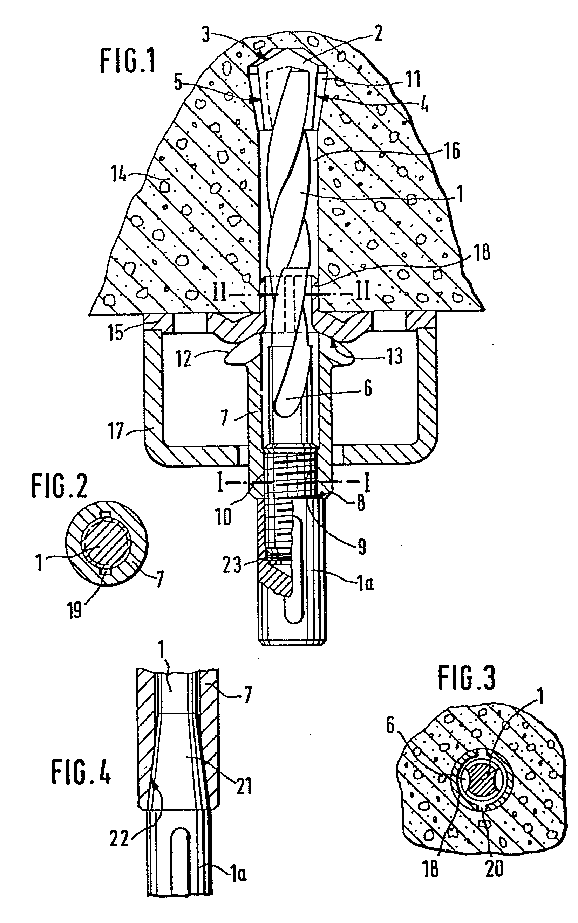

In einem die Bohrlochtiefe bestimmenden Abstand ist an dem Bohrschaft 1 die Anschlaghülse 7 angeordnet, die an der durch die Durchmesserverdickung des in das Bohrfutter eingreifenden Teils 1 a des Bohrschaftes sich ergebenden Schulter 8 anstößt. Zur Festsetzung der Anschlaghülse 7 am Bohrschaft 1 ist vor der Schulter 8 ein Gewindeabschnitt 9 angeordnet, auf das die Anschlaghülse 7 mit ihrem entsprechenden Innengewinde 10 aufschraubbar ist. Zur Ausführung der Schwenkbewegung für die Ausbildung der Hinterschneidung 11 weist die Anschlaghülse 7 eine konvexe Stirnseite 12 auf, die in einer Mulde 13 der auf der Oberfläche des Mauerwerks 14 aufliegenden Anschlagplatte 15 abgestützt ist. Dadurch ergibt sich ein Schwenklager, das es ermöglicht, den Bohrschaft 1 während des Bohrvorganges auszuschwenken und durch Rühren die Hinterschneidung 11 des Bohrloches 16 auszubilden. Die Anschlagplatte 15 ist zusätzlich mit einem Gehäuse 17 versehen, das zum Auffangen des Bohrmehls insbesondere bei Bohrungen an Decken dient. Zur Führung und Halterung der Anschlagplatte weist diese einen hülsenförmigen, in das Bohrloch 16 eingreifenden Zentrieransatz 18 auf. Um ein Überstülpen der Anschlagplatte 15 sowie der Anschlaghülse 7 über das Bohrplättchen 2 bei den dargestellen Verhältnissen zu ermöglichen, sind im Bereich des Innengewindes 10 der Anschlaghülse 7 sowie im Bereich des in das Bohrloch eingreifenden Zentrieransatzes 18 längsverlaufende Einschlitzungen 19/20 vorgesehen, die auf die Abmessungen des Bohrplättchens 2 abgestimmt sind. (siehe Figuren 2 und 3).

Um bei Abnützung des Bohrplättchens 2 das Auswechseln zu erleichtern, sowie eine Möglichkeit zu schaffen, die Bohreinheit für verschiedene Bohrfutteraufnahmen anpassen zu können, kann der in das Bohrfutter eingreifende Teil 1a des Bohrschaftes ein Innengewinde 23 aufweisen, in das der das Bohrplättchen 2 tragende Teil 1 einschraubbar ist.

Figur 4 zeigt eine Ausbildung des Anschlages in Form eines am Bohrschaft angeordneten Konus 21 und einem entsprechenden Gegenkonus 22 an der dem Bohrloch abgewandten Seite der Anschlaghülse 7.

## Ansprüche

1. Zur Herstellung von Bohrlöchern (16) mit Hinterschneidungen (11) bestimmte Bohreinheit aus Bohrschaft (1) und mit diesem verbundenen Bohrplättchen (2), welches außer der Stirnschneide (3) den Bohrschaft (1) radial überragende Seitenschneiden (4, 5) aufweist, und die mit einer auf dem Bohrschaft (1) festsetzbaren Anschlaghülse (7) versehen ist, die sich in einer Mulde (13) einer über den Bohrschaft (1) geschobenen Anschlagplatte (15) zur Bildung eines Schwenklagers abstützt, dadurch gekennzeichnet, daß der in das Bohrfutter eingreifende Teil (19) des Bohrschaftes (1) einen verstärkten Durchmesser zur Bildung eines Anschlages aufweist, an dem die Anschlaghülse (7) mit ihrer vom Bohrloch (16) abgewandten Seite anstößt.

2. Bohreinheit nach Anspruch 1, dadurch gekennzeichnet, daß der Anschlag des Bohrschaftes als Schulter (8) ausgebildet und vor der Schulter (8) ein Gewindeabschnitt (9) angeordnet ist, auf den die Anschlaghülse (7) mit einem entsprechenden Innengewinde (10) zu ihrer Festsetzung auf dem Bohrschaft (1) aufschraubbar ist.

3. Bohreinheit nach Anspruch 1, dadurch gekennzeichnet, daß der Anschlag am Bohrschaft als Konus (21) ausgebildet ist und die dem Bohrloch (16) abgewandte Seite der Anschlaghülse den entsprechenden Gegenkonus (22) aufweist.

4. Bohreinheit nach Anspruch 1, dadurch gekennzeichnet, daß zum Überstülpen über das Bohrplättchen (2) die Anschlaghülse (7) an ihrer Innenbohrung zwei sich gegenüberliegende, in Längsrichtung verlaufende Einschlitzungen (19) aufweist.

5. Bohreinheit nach Anspruch 1, dadurch gekennzeichnet, daß der Bohrschaft aus zwei Teilen (1, 1a) besteht, wobei der das Bohrplättchen tragende Teil (1) in den im Durchmesser verstärkten Teil (1a) des Bohrschaftes einschraubbar ist.

## Claims

1. Drill unit which is intended for producing drilled holes (16) having undercuts (11) and which comprises a drill shaft (1) and a laminar drill bit (2) connected thereto having lateral cutting edges (4, 5) which, apart from the cutting edges at the tip (3), project radially beyond the drill shaft (1), and the unit being provided with a stop sleeve (7) that can be fastened on the drill shaft (1) and is supported, to form a swivel bearing, in a depression (13) in a stop plate (15) mounted over the drill shaft (1), characterised in that that part (1a) of the drill shaft (1) that engages in the drill chuck has an increased diameter in order to form an abutment against which the end of the stop sleeve (7) remote from the drilled hole (16) rests.

2. Drill unit according to claim 1, characterised in that the abutment of the drill shaft is constructed as a shoulder (8) and that a threaded portion (9) is located beyond the shoulder (8) onto which portion the stop sleeve (7) having a corresponding internal sleeve (10) can be screwed in order to fasten it on the drill shaft (1).

3. Drill unit according to claim 1, characterised in that the abutment on the drill shaft (1) is constructed as a cone (21) and that the end of the stop sleeve remote from the drilled hole (16) has a corresponding complementary cone.

4. Drill unit according to claim 1, characterised in that the stop sleeve (7) has, to enable it to be slipped over the drill bit (2), on its internal bore, two opposed slots (19) extending in a longitudinal direction.

5. Drill unit according to claim 1, characterised in that the drill shaft comprises two parts (1, 1a), it being possible for the part (1) carrying the drill bit to be screwed into the part (1a) of the drill shaft which has the increased diameter.

## Revendications

1. Ensemble de perçage destiné à réaliser des trous forés (16) présentant des détalonnages (11), comprenant un foret (1) et une plaquette de forage (2) qui, reliée à ce foret, comporte, en plus du tranchant extrême (3), des tranchants latéraux (4, 5) faisant saillie radialement au-delà dudit foret (1), ledit ensemble étant muni d'une douille de butée (7) qui peut être bloquée sur le foret (1) et prend appui dans une cuvette (13) d'une plaque de butée (13) enfilée sur ledit foret (1), en vue de constituer un palier de pivotement, ensemble caractérisé par le fait que la partie (1a) du foret (1) engagée dans le mandrin présente un diamètre renforcé, en vue de former une butée contre laquelle ladite douille de butée (7) est appliquée par son côté éloigné du trou foré (16).

2. Ensemble de perçage selon la revendication 1, caractérisé par le fait que la butée du foret est réalisée sous la forme d'un épaulement (8) et que, devant cet épaulement (8), se trouve un tronçon fileté (9) sur lequel la douille de butée (7) peut être vissée par son taraudage correspondant (10), afin de la bloquer sur le foret (1).

3. Ensemble de perçage selon la revendication 1, caractérisé par le fait que la butée sur le foret est réalisée sous la forme d'un cône (21) et le côté de la douille de butée éloigné du trou foré (16) possède le cône complémentaire correspondant (22).

4. Ensemble de perçage selon la revendication 1, caractérisé par le fait que, pour permettre son enfilement sur la plaquette de forage (2), la douille de butée (7) présente dans son canal interne deux entailles (19) s'étendant dans le sens longitudinal en regard l'une de l'autre.

5. Ensemble de perçage selon la revendication 1, caractérisé par le fait que le foret se compose de deux parties (1, 1a), la partie (1) supportant la plaquette de forage pouvant être vissée à l'intérieur de la partie (1a) dudit foret présentant un diamètre renforcé.

FIG.1

FIG.2

FIG.3

FIG.4